Europäisches Patentamt

European Patent Office

Office européen des brevets

(19)

(11) Publication number: **0 185 004**
**B1**

## (12) EUROPEAN PATENT SPECIFICATION

(45) Date of publication of patent specification: **26.10.88**

(51) Int. Cl.⁴: **C 22 B 15/14, C 22 B 7/00**

(21) Application number: **85850395.6**

(22) Date of filing: **09.12.85**

(54) **A method for processing of secondary metallic copper-containing smelt materials.**

(30) Priority: **12.12.84 SE 8406330**

(43) Date of publication of application:
**18.06.86 Bulletin 86/25**

(45) Publication of the grant of the patent:
**26.10.88 Bulletin 88/43**

(84) Designated Contracting States:
**AT BE CH DE FR GB IT LI LU NL**

(56) References cited:
**DE-A-2 142 760**
**DE-B-1 151 385**
**DE-B-2 255 977**
**DE-C-2 521 830**
**US-A-2 429 584**
**US-A-3 561 952**
**US-A-3 682 623**
**US-A-4 108 638**
**US-A-4 318 737**

(73) Proprietor: **Boliden Aktiebolag**
**Box 5508**
**S-114 85 Stockholm (SE)**

(72) Inventor: **Petersson, Stig Arvid**
**Vintergatan 25**
**S-932 00 Skelleftehamn (SE)**

(74) Representative: **Lundin, Björn-Eric et al**
**Boliden Aktiebolag Patents and Trade Marks**
**Box 81550**
**S-104 82 Stockholm (SE)**

Courier Press, Leamington Spa, England.

## Description

The present invention relates to the processing of secondary metallic smelt materials, and more specifically to the recovery of metal values from such secondary smelt materials as those which contain predominantly copper together with metals included in the group iron, nickel, tin, zinc and lead, by smelting the materials in a top-blown rotary converter.

Secondary metallic smelt materials of this kind are generally referred to as polymetal scrap, due to their substantial valuable metal content additional to the copper contained therein. Distinct from scrap which is richer in copper or poor in other metals and which is normally referred to as copper scrap, such polymetal scrap is not considered a commodity which can be beneficially processed by means of conventional process procedures in the copper lines of copper smelters.

Polymetal scrap may include copper-alloy scrap metal, such as brass, bronze, and red metals, together with scrap containing pure copper metal or copper alloys, and other metals, for example iron or tin, in the form of plated products or products coated with metal in some other way, and also other forms of scrap products comprising different metallic materials, for example vehicle radiators. The main value of polymetal scrap lies in its copper and precious metal content, although beneficial secondary values are also to be found, primarily in the tin, zinc, nickel and lead content of the scrap. The composition of such polymetal scrap available on the market varies within relatively wide limits. Typical polymetal scrap, however, contains about 75% copper, 1-6% nickel, 3-8% zinc, 2-4% lead, 6-8% iron, and 2-6% tin, all percentages here and in the following being calculated by weight.

Polymetal scrap of the aforementioned kind is today worked up in different ways. One conventional method is to convert the scrap by oxidation with air in a converter to form a relatively pure copper phase, whereas the remaining metals, together with a not inconsiderable part of the copper present, are oxidized and incorporated in a slag phase. The resultant slag phase is then reduced in a shaft furnace with the aid of coke and iron-containing scrap, to form black copper, which can actually be designated an alloy of copper with other metals present. The black copper is then converted in a converter in the same manner as that described above with respect to metal scrap. Copper obtained from this conversion process is cast into anodes and refined by electrolysis in a conventional manner.

It is also known to smelt the scrap in a shaft furnace in a reducing atmosphere and to convert the resultant black copper in converters in the above-described manner.

A common feature of these known processes for working-up polymetal scrap on the basis of reduction smelting of the scrap in shaft furnaces is that there is formed an oxide dust which contains large percentages of the tin, lead and zinc initially present in the scrap, this dust being formed both during the reduction smelting process and during the conversion process. Since the dust contains various different metal oxides, it is necessary to subject the dust to separate treatment processes in order to enable the various metals to be isolated, for example processes based on the further reduction and volatilization of tin and lead, or on hydrometallurgical treatment. Even though previously known processes of this kind are based on the selective oxidation of lead, tin and zinc such as to isolate the same from copper, it has not been possible hitherto to control the processes with respect to prevailing oxidizing conditions in a manner which will enable a sufficiently high degree of selectivity to be achieved.

In an attempt to solve the aforementioned problems experienced when processing polymetal scrap, there was developed towards the end of the 1960's a process in which the shaft furnace used in the known conventional processes was replaced in principle with, for example, a Kaldo-type converter. The process is described in US-A-3 682 623 and is based on the reduction-smelting of scrap while adding metallic iron and silica to form black copper, which is then subjected to further treatment, there being obtained in conjunction therewith an iron-silicate containing slag, which is disclosed as being dumped. This slag has a relatively high metal-value content, for example the zinc content is reported to be as high as about 11%, and these values are lost unless it is possible to refine the slag through a so-called slag fuming process. The resultant black copper is oxidized by adding silica, to form a copper phase of anode quality and a slag which contains residual metals together with some of the copper. The slag is then reduced with iron, to again form black copper, which is cycled back to the preceding process stage. The slag is then reduced in a similar manner, to separate therefrom a tin-lead-alloy, whereafter the thus depleted slag can be dumped. Zinc is vaporized during all of the treatment stages, and oxidized and collected in the form of zinc oxide.

One serious drawback with this known rotary converter process, however, is that the selectivity afforded by the process with regard to metal recovery is not sufficiently high and that the metal yields to useful end products are considered too low in relation to the costs of providing such converters. In addition, it is necessary to charge iron scrap to the converter during all of the many process stages effected therein, which subjects the converter and its lining to considerable mechanical stress and also necessitates an interruption in the process for each successive iron-scrap charge made.

The object of the present invention is to provide a method for processing polymetal scrap in rotary converters which is an improvement on hitherto known techniques based on the reduction smelting of scrap to black copper. Thus, the invention has for its purpose the provision of a method which will provide for improved selectivity between the metals to be recovered and for improved recovery of higher metal values,. and which also results in lower operational and maintenance costs through a reduction in wear-and-tear on the furnace and a more continuous use of the furnace.

Accordingly, the method is characterized by the process steps set forth in the following claims.

Thus, in accordance with the invention, the secondary metallic smelt material is melted down in a top blown rotary converter, together with a flux, normally silica, and an oxidizing agent is charged to the converter during and/or subsequent to the smelting process. The smelting process is effected in a manner to form a bath comprising a copper phase containing at least the major part of any nickel present and a slag phase containing at least the major part of the lead, tin, zinc and iron initially present in the secondary material. Upon completion of the smelting and oxidation processes, a reducing agent is charged to the bath, and optionally also a sulphur and/or chlorine donating substance, for example a sulphide concentrate such as chalcopyrite and iron pyrite or chlorine-containing metal concentrate or ashes, to expel zinc and tin from the bath in volatile form. This can be effected by first charging the reductant, preferably coke, and the sulphur and/or chlorine donating substance to the bath, to form and expel volatile tin(II)sulphide and/or tin(II)chloride therefrom, and by then adding to the bath a reductant solely for reducing the zinc present and expelling the same in the form of zinc vapour. The expulsion of both tin and zinc from the slag is greatly facilitated and accelerated when the slag is previously brought to a sluggish or viscous consistency, by adjusting the flux additions, as described in EP-A1-0 153 914 (claiming priority from SE-A-8400625-3 and SE-A-8404418-9). Alternatively, tin can be expelled solely by adding a reductant to the bath, i.e. in the absence of any other form of additive. In this case, zinc is fumed-off first, whereafter tin is fumed-off in an oxide form, primarily by vaporizing tin(II)oxide from the slag phase. The tin and zinc fumed-off from the bath are oxidized externally of the converter, by bringing the same into contact with oxygen (air), and can be collected substantially selectively in a subsequent gas cleansing stage, as tin(IV)oxide and zinc oxide respectively.

Subsequent to the expulsion of zinc and tin and the reduction to which the slag is subjected during the processes involved therewith, practically all of any lead present will have been substantially chemically reduced and absorbed in the copper phase. The slag is thus now devoid of metal values and can be removed and dumped.

When the copper phase is known to contain lead it is oxidized, preferably by introducing oxygen gas or air rich in oxygen thereinto and by adding a silica flux. There is thus formed a lead-silicate slag which can be separated from the copper phase and removed from the converter.

When the residual copper phase is known to contain nickel, the copper phase is oxidized in a further stage, for example by introducing an oxygen gas or air rich in oxygen thereinto, this oxidation process being effected in a manner to oxidize substantially all of the nickel present together with part of the copper. The residual non-oxidized copper phase is separated from the slag and removed from the converter as blister copper, which can be processed in a conventional manner for the production of copper.

There remains in the converter a copper-nickel oxide bath which can be subsequently reduced to form a copper-nickel alloy.

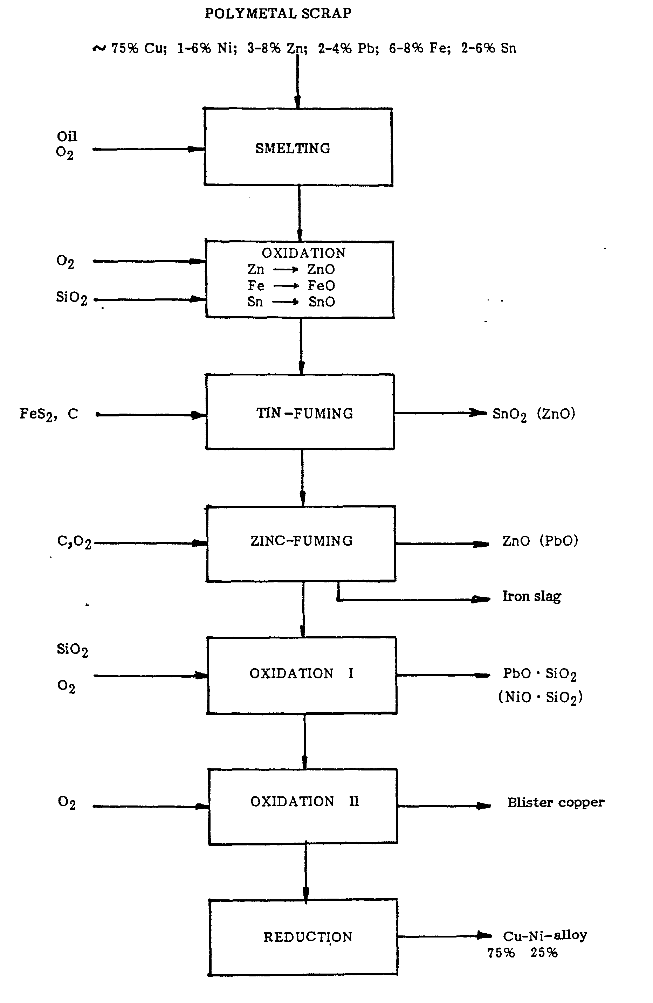

The invention will now be described in more detail with reference to the accompanying drawing in the form of a flow sheet illustrating a preferred embodiment of the invention.

Polymetal scrap is melted down in a Kaldo converter with the aid of an oxygen-oil burner. The burner is adjusted during the smelting process, to produce a non-reducing atmosphere. Subsequent to smelting the scrap, the resultant bath is oxidized, by introducing oxygen and silica thereinto. Because the scrap is melted down in a non-reducing atmosphere, it is possible to lower the dust losses experienced during the smelting period. During the oxidation stage, the major part of metallic zinc, iron and tin present in the scrap is oxidized, and the resultant metal oxides are slagged by adding fluxes to form a zinc-iron-tin-silicate slag.

Fluxes are added to the slag so that it obtains a viscous consistency at selected slag treatment temperatures. A suitable temperature in this respect is between 1150°C and 1250°C. There is sought a viscosity of flowability corresponding to that obtained with an iron-calcium-silicate-slag containing 20-30% $SiO_2$, 25-35% CaO, <25% FeO and 5-10% $MgO+Al_2O_3$. Finely divided coke and pyrite are charged to the converter and held suspended therein by rotating the furnace so as to vigorously agitate the molten bath contained therein. The presence of both coke and pyrite in the bath promotes the chemical reduction of the tin content and the formation of volatile tin(II)sulphide, SnS. The slag is held in suspension at selected treatment temperature until tin has been expelled to the extent desired. Some zinc is also fumed-off in conjunction with the expulsion of tin from the bath, although the major part of the zinc present will be fumed-off in the following stage, in which finely divided coke and gaseous oxygen are introduced into the bath in quantities at which so-called zinc fuming is promoted. The great part of any lead present is found together with the zinc.

Upon completion of the tin and zinc expulsion stages, the slag is separated from the bath and tapped from the converter.

The remaining metal bath is oxidized, while adding a flux thereto for slagging any remaining lead. Some nickel will also be slagged in conjunction therewith. The resultant lead-nickel-silicate slag is tapped off.

The molten metal bath is oxidized in a further oxidation stage by supplying thereto gaseous oxygen in quantities such as to oxidize the residual nickel content of the metal phase. A substantial amount of copper, however, is also oxidized in conjunction herewith. A copper-nickel-oxide phase is formed which, subsequent to isolating the residual metal phase, mainly pure copper (blister copper), is chemically reduced with the aid of a suitable reductant, for example coke, to form a copper-nickel-alloy which contains roughly 75% Cu and 25% Ni.

**Claims**

1. A method for recovering metal values from secondary metallic smelt material containing mainly copper and also metals from the group iron, nickel, tin, zinc and lead, by smelting the material in a top blown rotary converter, melting the secondary material together with flux and supplying oxidant to form a molten bath comprising a copper phase, containing at least the major part of any nickel present, and a slag phase containing at least a major part of the lead, tin, zinc and iron present characterized by;

adding to the bath reductant and optionally also sulphur and/or chlorine donating substance, to expel zinc and tin in a volatile form;

separating the slag phase thus depleted of zinc and tin from the remainder of the bath, and removing the slag from the converter;

when lead is known to be present, introducing oxidant and flux to the remainder of the bath to slag the lead content thereof;

separating the resultant lead-containing slag from the bath and removing the slag from the converter;

when nickel is known to be present, introducing oxidant into the remaining bath to form an oxide phase containing substantially all the nickel present;

separating the remaining copper phase from the bath and removing the copper phase from the converter; and

reducing the oxide phase to form a copper-nickel alloy.

2. A method according to claim 1, characterized by expelling tin from the bath in volatile sulphide and/or chloride form, by supplying sulphur and/or chlorine donating substance and reductant to the bath.

3. A method according to claim 2, characterized in that the sulphur donating substance is a sulphur-containing ore concentrate, for example chalcopyrite or iron pyrite, and the chlorine-donating substance is a chlorine-containing metal concentrate or a metal ashes.

4. A method according to claim 2, characterized by expelling zinc from the bath in a stage subsequent to the tin expulsion stage.

5. A method according to claim 1, characterized by expelling tin from the bath in an oxide form, by volatilizing tin(II)oxide present in the slag.

6. A method according to claim 5, characterized by expelling zinc in a stage prior to the tin expulsion stage.

7. A method according to claim 1, characterized by adding solid carbonaceous reductant, preferably fine grain coke, to the bath in order to fume-off zinc present therein; and by imparting a sluggish or viscous consistency to the slag phase during the reduction process.

8. A method according to claim 1, characterized in that the oxidant used is gaseous oxygen or oxygen-enriched air.

**Patentansprüche**

1. Verfahren zur Gewinnung von Metall aus sekundärem metallischem Schmelzmaterial, das hauptsächlich Kupfer und auch Metalle aus der Gruppe Eisen, Nickel, Zinn, Zink und Blei enthält, durch Schmelzen des Materials in einem rotierenden Aufblaskonverter,

Schmelzen des sekundären Materials zusammen mit Flußmittel und Zuführen von Oxidationsmittel unter Bildung eines eine Kupferphase umfassenden Bades, das wenigstens den Hauptteil von vorhandenem Nickel enthält, und einer Schlackenphase, die wenigstens einen Hauptteil des vorhandenen Bleis, Zinns, Zinks und Eisens enthält, dadurch gekennzeichnet, daß man.

zu dem Bad Reduktionsmittel und gegebenenfalls auch Schwefel und/oder Chlor abgebende Substanz zusetzt, um Zink und Zinn in einer flüchtigen Form auszutreiben,

die so an Zink und Zinn verarmte Schlackenphase von dem Rest des Bades abtrennt und die Schlacke aus dem Konverter entfernt,

wenn bekanntermaßen Blei vorhanden ist, Oxidationsmittel und Flußmittel in den Rest des Bades einführt, um seinen Bleigehalt zu verschlacken,

die resultierende bleihaltige Schlacke von dem Bad abtrennt und die Schlacke aus dem Konverter entfernt,

wenn bekanntermaßen Nickel vorhanden ist, Oxidatonsmittel in das verbleibende Bad einführt, um eine im wesentlichen das gesamte vorhandene Nickel enthaltende Oxidphase zu bilden,

die verbleibende Kupferphase von dem Bad abtrennt und die Kupferphase aus dem Konverter entfernt und

die Oxidphase unter Bildung einer Kupfer-Nickellegierung reduziert.

2. Verfahren nach Anspruch 1, dadurch gekennzeichnet, daß man Zinn aus dem Bad in flüchtiger Sulfid- und/oder Chloridform austreibt, indem man dem Bad Schwefel und/oder Chlor abgebende Substanz und Reduktionsmittel zuführt.

3. Verfahren nach Anspruch 2, dadurch gekennzeichnet, daß die Schwefel abgebende Substanz ein schwefelhaltiges Erzkonzentrat, wie beispielsweise Chalkopyrit oder Eisenpyrit, und die Chlor abgebende Substanz ein chlorhaltiges Metallkonzentrat oder eine Metallasche ist.

4. Verfahren nach Anspruch 2, dadurch gekennzeichnet, daß man in einer Stufe anschließend an die Stufe des Zinnaustreibens Zink aus dem Bad austreibt.

5. Verfahren nach Anspruch 1, dadurch gekennzeichnet, daß man aus dem Bad Zinn in einer Oxidform austreibt, indem man in der Schlacke vorhandenes Zinn(II)-oxid verflüchtigt.

6. Verfahren nach Anspruch 5, dadurch gekennzeichnet, daß man Zink in einer Stufe vor der Zinnaustreibungsstufe austreibt.

7. Verfahren nach Anspruch 1, dadurch gekennzeichnet, daß man festes kohlenstoffhaltiges Reduktionsmittel, vorzugsweise feinkörnigen Koks, dem Bad zusetzt, um darin vorhandenes Zink abzurauchen, und indem man der Schlackenphase während des Reduktionsverfahrens eine zähflüssige oder viskose Konsistenz verleiht.

8. Verfahren nach Anspruch 1, dadurch gekennzeichnet, daß das verwendete Oxidationsmittel gasförmger Sauerstoff oder mit Sauerstoff angereicherte Luft ist.

**Revendications**

1. Procédé de récupération de métaux au départ d'une matière fondue métallique secondaire contenant principalement du cuivre et également des métaux du groupe formé par le fer, le nickel, l'étain, le zinc et le plomb, par fusion de cette matière dans un convertisseur rotatif à soufflage d'en haut, fusion de la matière secondaire avec un fondant, et alimentation d'un agent oxydant pour former un bain fondu comprenant une phase de cuivre, contenant au moins la majeure partie de tout nickel quelconque présent, et une phase de laitier contenant au moins une proportion majeure du plomb, de l'étain, du zinc et du fer présents, caractérisé par:

l'addition au bain, d'un agent réducteur et éventuellement aussi d'une substance cédant du soufre et/ou du chlore, pour expulser le zinc et l'étain sous une forme volatile.

la séparation de la phase de laitier ainsi épuisée en zinc et en étain, par rapport au reste du bain, et l'enlèvement du laitier hors du convertisseur;

lorsqu'on sait qu'il y a du plomb, l'introduction d'un agent oxydant et d'un fondant dans le reste du bain pour transformer en laitier le contenu en plomb de celui-ci;

la séparation du laitier résultant contenant du plomb à partir du bain et l'enlèvement du laitier hors du convertisseur;

lorsqu'on sait qu'il y a du nickel, l'introduction d'un agent oxydant dans le bain restant pour former une phase d'oxyde contenant pratiquement tout le nickel présent;

la séparation de la phase de cuivre restante à partir du bain et l'enlèvement de la phase de cuivre hors du convertisseur; et

la réduction de la phase oxydée pour former un alliage de cuivre-nickel.

2. Procédé suivant la revendication 1, caractérisée par l'expulsion de l'étain à partir du bain sous forme d'un sulfure et/ou d'un chlorure volatils, par addition d'une substance cédant du soufre et/ou du chlore et d'un agent réducteur au bain.

3. Procédé suivant la revendication 2, caractérisé en ce que la substance cédant du soufre est un concentré de minerai contenant du soufre, par exemple de la chalcopyrite ou de la pyrite de fer, et en ce que la substance cédant du chlore est un concentré métallique contenant du chlore ou des cendres métalliques.

4. Procédé suivant revendication 2, caractérisé par l'expulsion du zinc à partir du bain au cours d'une phase postérieure à la phase d'expulsion de l'étain.

5. Procédé suivant la revendication 1, caractérisé par l'expulsion de l'étain à partir du bain sous la forme d'oxyde, par volatilisation de l'oxyde d'étain (II) présent dans le laitier.

6. Procédé suivant la revendication 5, caractérisé par l'expulsion du zinc au cours d'une phase postérieure à la phase d'expulsion de l'étain.

7. Procédé suivant la revendication 1, caractérisé par l'addition d'un agent réducteur carboné solide, de préférence du coke à grains fins, au bain pour provoquer la volatilisation du zinc qui y est présent, et par le fait qu'une consistance visqueuse ou gommeuse est impartie à la phase de laitier durant le procédé de réduction.

8. Procédé suivant la revendication 1, caractérisé en ce que l'agent oxydant utilisé est de l'oxygène gazeux ou de l'air enrichi en oxygène.

**0 185 004**

POLYMETAL SCRAP

$\sim$ 75% Cu; 1–6% Ni; 3–8% Zn; 2–4% Pb; 6–8% Fe; 2–6% Sn

Oil
$O_2$ → **SMELTING**

$O_2$ →
$SiO_2$ → **OXIDATION**
$Zn \longrightarrow ZnO$
$Fe \longrightarrow FeO$
$Sn \longrightarrow SnO$

$FeS_2$, C → **TIN –FUMING** → $SnO_2$ (ZnO)

$C,O_2$ → **ZINC-FUMING** → ZnO (PbO)
→ Iron slag

$SiO_2$
$O_2$ → **OXIDATION   I** → $PbO \cdot SiO_2$
$(NiO \cdot SiO_2)$

$O_2$ → **OXIDATION   II** → Blister copper

**REDUCTION** → Cu–Ni–alloy
75%  25%

1